# EUROPEAN PATENT APPLICATION

(11) **EP 1 944 937 A1**
(43) Date of publication of application: **16.07.2008**
(21) Application number: 06805163.0
(22) Date of filing: 03.11.2006
(51) Int. Cl.: H04L 29/06

(54) **METHOD AND SYSTEM FOR ASSIGNING SFID IN WORLDWIDE INTEROPERABILITY FOR MICROWAVE ACCESS**

(30) Priority: 03.11.2005 CN 200510115429
(71) Applicant: Huawei Technologies Co., Ltd., Longgang District Shenzhen 518129 (CN)
(72) Inventor: QIAN, Tao, Guangdong 518129 (CN); ZHANG, Jin, Guangdong 518129 (CN); YUAN, Liping, Guangdong 518129 (CN); CHEN, Jing, Guangdong 518129 (CN)
(74) Representative: Thun, Clemens
(86) International application number: PCT/CN2006/002962
(87) International publication number: WO 2007/051426

(57) **Abstract**

A method for allocating an SFID in a WiMAX network including an ASN and a CSN may include: establishing, by the CSN a service flow in response to a service flow creation request from an MSS, and sending the service flow to the ASN; and allocating, by the ASN, a value that currently is not used by the MSS as an SFID of the service flow requested by the MSS. A system for allocating an SFID in a WiMAX network is also provided. According to the method and system for allocating an SFID in a WiMAX network, after an MSS performs a handover, it is not necessary to notify a function module generating an SFID to release the SFID, thereby simplifying the SFID management.

## Description

### Field of the Invention

The present invention relates to Worldwide Interoperability Microwave Access (WiMAX) network, and particularly to a method and system for allocating a Service Flow Identifier (SFID) in a WiMAX network.

### Background of the Invention

Along with rapid development of internet services and wide use of radio networks, the WiMAX system attracts more attention and is used widely due to its desirable radio access performance. How to use a WiMAX system to provide services to mobile users in order to provide better packet service forwarding and/or routing between a network and a mobile user has become a focus of business studies.

According to WiMAX standards, when a Mobile Subscriber Station (MSS) accesses to a Base Station (BS) to request a service, each Service Flow provided by the BS for the MSS should be identified. That is, each SFID represents one unidirectional service flow with a QoS parameter. When the MSS performs a handover within a Network Access Provider (NAP), the SFIDs keeps unchanged. However, the WiMAX standard has not discussed how to allocate the SDFD.

### Summary of the Invention

A method and system for allocating an SFID in a WiMAX network are provided in embodiments of the present invention.

In accordance with an embodiment of the present invention, a method for allocating an SFID in a WiMAX network including an Access Service Network (ASN) and a Connection Service Network (CSN) may include:
establishing, by the CSN a service flow in response to a service flow creation request from an MSS, and sending the service flow to the ASN; and
allocating, by the ASN, a value that currently is not used by the MSS as an SFID of the service flow requested by the MSS.
a Service Flow Authorization (SFA) in the ASN may allocate a value that currently is not used by the MSS as an SFID, and send the SFID to a Service Flow Management (SFM) in the ASN. Alternatively, an SFM in the ASN may allocate a value that currently is not used by the MSS as an SFID, and send the SFID to an SFA in the ASN. The SFID may be carried in a source reservation request and is sent from an SFA to an SFM or from an SFM to an SFA. The SFID is further released in response to a termination of the service flow.

In accordance with an embodiment of the present invention, in response to a handover of the MSS, the SFID may be sent from a severing SFA to a target SFA by carrying the SFID in information of the MSS or may be sent from a serving SFM to a target SFM by carrying the SFID in information of the MSS. The SFID is further released by the target SFA or target SFM in response to a termination of the service flow.

In accordance with an embodiment of the present invention, the SFID may be in a preset data range. The data range may be 0-2³².

In accordance with an embodiment of the present invention, a system for allocating an SFID in a WiMAX network may include an ASN function module and an MSS, where the ASN function module is adapted to allocate a value that currently is not used by the MSS as an SFID of a service flow requested by the MSS.

The ASN function module may be an SFA or an SFM.

The ASN function module may include a unit adapted to release the SFID in response to a termination of the service flow.

The method and system provided in embodiments of the present invention provide a solution of how to allocate the SFID. Further, after an MSS performs a handover, it is not necessary to notify a function module generating an SFID to release the SFID, thereby simplifying the SFID management.

### Brief Description of the Drawings

The embodiments of the present invention are hereinafter described in detail with reference to the accompanying drawings to make the characteristics and merits of the present invention easily be understood by those skilled in the art. In the accompanying drawings:
Fig. 1 is a schematic illustrating a WiMAX network in prior art;
Fig. 2 is a schematic illustrating message exchanging between a Quality of Service (QoS) logic entity SFA and a QoS logic entity SFM in a WiMAX network in prior art;
Fig. 3 is a schematic illustrating message exchanging between an SFA and an SFM when the SFA allocates an SFID in accordance with an embodiment of the present invention;
Fig. 4 is a schematic illustrating an SFA allocating an SFID in accordance with an embodiment of the present invention;
Fig. 5 is a schematic illustrating message exchanging between an SFA and an SFM when the SFM allocates an SFID in accordance with an embodiment of the present invention;
Fig. 6 is a schematic illustrating a system in accordance with an embodiment of the present invention.

### Detailed Description of the Invention

A detailed description of the present invention is provided hereinafter with reference to the accompany drawings and examples.

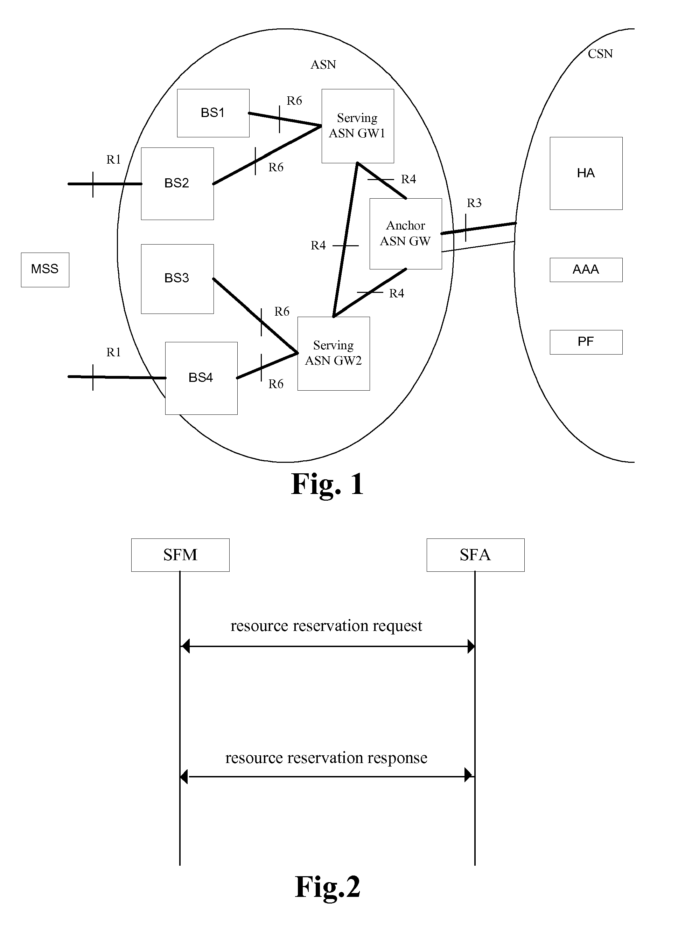

Figure 1 shows WiMAX network architecture. This architecture may include an Access Service Network (ASN) and a Connectivity Service Network (CSN). The ASN may include a Base Station (BS) and an Access Service Network Gateway (ASN GW).

A BS accessed by an MSS may be called a Serving BS. An ASN GW coupled to a BS via an R6 interface is called a Serving ASN GW; an ASN GW coupled to a Home Agent (HA) of a CSN via an R3 interface is called an Anchor ASN GW The Anchor ASN GW may be a logic entity and may be located with ASN GW1 and ASN GW2 in a same physical entity or in different physical entities. When an Anchor ASN GW and a Serving ASN GW are located in a same physical entity, the interface between the Anchor ASN GW and the Serving ASN GW is an internal interface and may not have to be a standard R4 interface.

Downlink packet service data is transmitted from the CSN to the ASN via the R3 interface between the HA and the Anchor ASN GW, and then to the MSS. After entering the ASN, the downlink packet service data is transmitted to the Serving ASN GW of the MSS via an R4 interface. The Serving ASN GW transmits the downlink packet service data via the BS to the MSS. Uplink data is transmitted from the MSS to the CSN via a reverse path and reaches a peer MSS.

An MSS may moves from a coverage area of a severing BS to a coverage area of a target BS. If the serving BS and target BS belong to a same ASN GW, the handover is referred to as an R6 interface mobile handover, e.g., the handover that the MSS moves from the coverage area of BS1 to the coverage area of BS2 in figure 1. If the serving BS and target BS belong to different ASN GWs, the handover is referred to as an R4 interface mobile handover, e.g., the handover that the MSS moves from the coverage area of BS2 to the coverage area of the BS3 in figure 1. A handover may be initiated by an MSS, a BS or an ASN GW

Figure 2 shows a schematic illustrating message exchanging between an SFA and an SFM in a WiMAX network.

The SFM is usually located in a BS, while the SFA is usually located in an ASN GW. Cells carried by a Resource Reservation Request (RR Request) and a Resource Reservation Response (RR Response) message in the WiMAX standard are shown in table 1:

**Table 1**

| **Message** | **Direction** | **Parameters** |
|---|---|---|
| RR-Request | SFA-SFM, SFM-SFA | Subscriber ID (SS ID) |
| | | Transaction ID |
| | | Service flow ID (Dot16 Service Flow ID) |
| | | Reservation Action |
| | | Direction |
| | | Resource Description |
| | | Media Flow Description |
| | | Media Flow Type |
| | | Reduced Resources |
| | | QoS Priority |
| RR-Response | SFM-S FA, SFA-SFM | Subscriber ID (SS ID) |
| | | Transaction ID |
| | | Service flow ID (Dot16 Service Flow ID) |
| | | Reservation Result |
| | | Resource Description |

The SFID is used between the SFA and SFM and is carried in an RR Request and/or an RR Response message. An SFID is adapted to identify one unidirectional service flow with a QoS parameter.

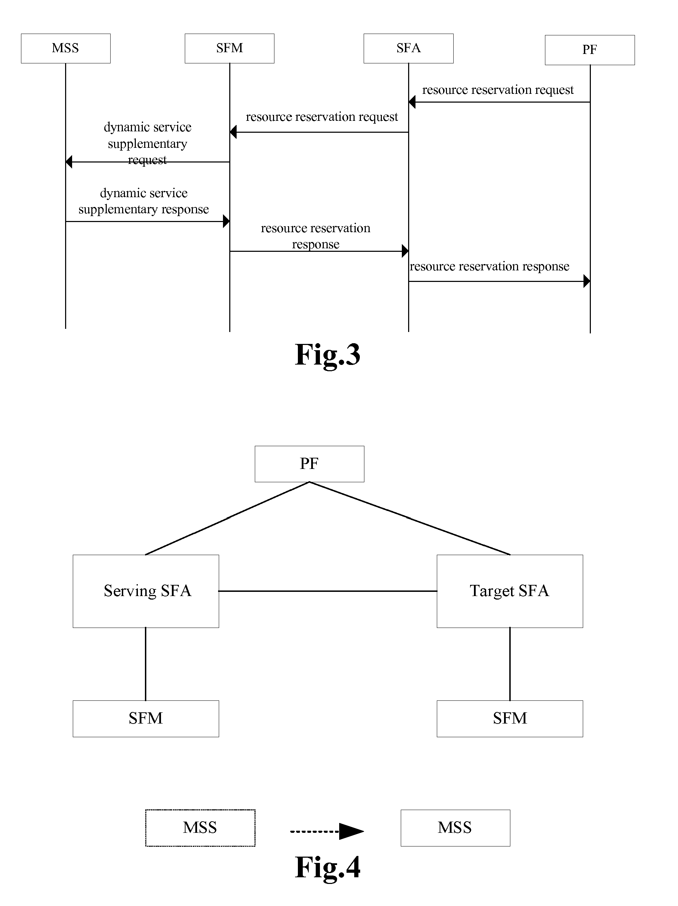

In an embodiment of the present invention, an SFID is allocated by an SFA. Figures 3 and 4 show a schematic illustrating allocating an SFID by an SFA in accordance with embodiments of the present invention. In an embodiment of the present invention, the SFID in the WiMAX network is used between the SFA and SFM and has a range of 0-2³². The SFID is adapted to identify one unidirectional service flow with a QoS parameter. Those skilled in the art should understand that the above range is only for example, and is not to be used for limiting the present invention.

As shown in figure 3, in accordance with an embodiment of the present invention, allocating an SFID by an SFA may include the followings.

When an MSS needs a service, the MSS requests a serving network to create a service flow. A Policy Function entity (PF) in the network sends a RR-Request message to a Serving SFA. In response to the RR-Request message, the Serving SFA allocates to the MSS a value N that is in the range of 0-2³² and is free to the MSS as an SFID. The SFID is carried in a RR-Request message and sent to an SFM usually located in a BS. The SFM thus obtains the SFID of the MSS. The value that is free to the MSS mentioned above refers to a value currently not used for the MSS.

In accordance with an embodiment of the present invention, if a second MSS also requests to create a service flow, the Serving SFA may allocate the same value N as that already allocated to a first MSS, as an SFID of the second MSS, because the mobile station identifiers (MSIDs) of the two MSS are different. In other words, the SFID needs to be unique under one MSS, needs not to be unique in all MSSs. That is, it just needs a unique combination of a MSID and a SFID under an ASN.

In accordance with an embodiment of the present invention, if an MSS requests to create more than one service flow, the Serving SFA selects more than one value, not used by the MSS, from the range of 0-2³² as the SFIDs of the service flows of the MSS. The SFIDs correspond to the service flows in a one-to-one mode. In other words, for one MSS, the SFIDs correspond to the service flows of that MSS in a one-to-one mode.

After allocating an SFID to a service flow requested by the MSS, the Serving SFA sends a RR-Request message to an SFM in the BS severing the MSS. The RR-Request message carries the allocated SFID, thus the SFM obtains the SFID of the MSS.

When the MSS does not use a service flow any more, the serving SFA should release resources allocated to the service flow and should release the SFID allocated to the service flow. Releasing the SFID refers to that the SFID may be reallocated to another service flow of the MSS for use.

Figure 4 shows allocating an SFID when an MSS moves from a coverage area of a first BS to a coverage area of a second BS in accordance with an embodiment of the present invention. This embodiment supposes that the MSS moves from a first SFA to a second SFA. In this embodiment, the first SFA that is serving the MSS is called a serving SFA, and the second SFA is called a target SFA. In response to a handover of the MSS, an SFID is carried in an MSS Context and sent to the target SFA. The MSS Context contains MSS related information including MSS identifier, service flow information and security information. The SFID keeps valid until of the corresponding service flow is terminated. If the service flow is terminated, it needs to release the SFID on the target SFA, and needs not to notify the serving SFA to release the SFID. This is because of the fact that after an MSS moves from the serving SFA to the target SFA, the value of the SFID of the MSS can be allocated to another service flow on the Serving SFA.

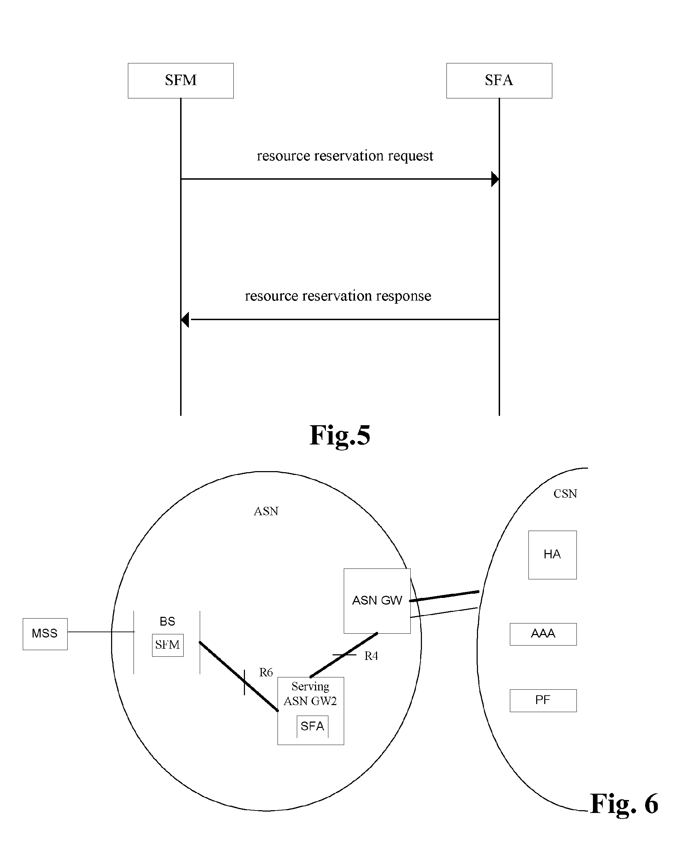

In addition, in accordance with an embodiment of the present invention, an SFM may also be adapted to allocate an SFID. As shown in figure 5, when an MSS requests to create a service flow, a network entity may allocate to the MSS a value N that is in the range of 0-2³² and is free for the MSS as an SFID.

As above, a solution for allocating an SFID in a WiMAX network is provided in accordance with embodiments of the present invention. By using the solution, it is not necessary to notify a function module generating an SFID for an MSS to release the SFID, thereby simplifying SFID management.

A system for allocating an SFID in a WiMAX network is also provided in accordance with an embodiment of the present invention. As shown in figure 6, the system may include an ASN function module and an MSS. The ASN function module allocates to an MSS a value that is free for the MSS as an SFID of a service flow requested by the MSS.

The ASN function module may be an SFA or an SFM. If the ASN function module is an SFA, the allocated SFID may be sent to an SFM; similarly, if the ASN function module is an SFM, the allocated SFID may be sent to an SFA. For example, if the ASN function module is an SFA, the SFA allocates an SFID, and sends the SFID allocated to an SFM. Similarly, if the ASN function module is an SFM, the SFM allocates an SFID, and sends the SFID allocated to an SFA. In addition, if the service flow corresponding to the SFID allocated is terminated, the ASN function module may further release the SFID.

Although in the embodiments of the present invention, the function module allocating SFID is described as an SFA or an SFM, those skilled in the art should understand that SFID may be allocated by any function module in the network accessed by the MSS. And apart from the MSS, any service execution module which requests a service flow is also in the scope of the present invention.

The previous description of the disclosed embodiments is provided to enable those skilled in the art to make or use the present invention. Various modifications to these embodiments will be readily apparent to those skilled in the art and generic principles defined herein may be applied to other embodiments without departing from the scope of the invention. Thus, the present invention is not intended to be limited to the embodiments shown herein but is to be accorded the widest scope consistent with the principles and novel features disclosed herein.

## Claims

1. A method for allocating a Service Flow Identifier SFID in a Worldwide Interoperability Microwave Access WiMAX network comprising an Access Service Network ASN and a Connection Service Network CSN, comprising:
establishing, by the CSN, a service flow in response to a service flow creation request from a Mobile Subscriber Station MSS, and sending the service flow to the ASN; and
allocating, by the ASN, a value that currently is not used by the MSS as an SFID of the service flow requested by the MSS.

2. The method of claim 1, wherein the allocating the value that currently is not used by the MSS as an SFID comprises:
allocating, by a Service Flow Authorization SFA in the ASN, a value that currently is not used by the MSS as an SFID.

3. The method of claim 2, further comprising:
sending, by the SFA, the SFID to a Service Flow Management SFM in the ASN.

4. The method of claim 1, wherein the allocating the value that currently is not used by the MSS as an SFID comprises:
allocating, by an SFM in the ASN, a value that currently is not used by the MSS as an SFID.

5. The method of claim 4, further comprising:
sending, by the SFM, the SFID to an SFA in the ASN.

6. The method of claim 3 or 5, wherein the SFID is carried in a source reservation request and sent.

7. The method of claim 1, further comprising:
releasing the SFID in response to the termination of the service flow.

8. A method of claim 1, further comprises:
in response to a handover of the MSS, sending the SFID from a severing SFA to a target SFA by carrying the SFID in information of the MSS or sending the SFID from a serving SFM to a target SFM by carrying the SFID in information of the MSS.

9. The method of claim 8, further comprising:
releasing, by the target SFA or target SFM, the SFID in response to a termination of the service flow.

10. The method of claim 1, wherein the SFID is in a preset data range.

11. The method of claim 10, wherein the data range is 0-2³².

12. A system of allocating an SFID in a Worldwide Interoperability Microwave Access WiMAX network, comprising an Access Service Network ASN function module and an MSS,
wherein
the ASN function module is adapted to allocate a value that currently is not used by the MSS as an SFID of a service flow requested by the MSS..

13. The system of Claim 12, wherein the ASN function module comprises an SFA or an SFM.

14. The system of claim 12, wherein the ASN function module comprises a unit, adapted to release the SFID in response to a termination of the service flow.
